# EUROPEAN PATENT APPLICATION

(11) **EP 4 603 320 A1**
(43) Date of publication of application: **20.08.2025**
(21) Application number: 25157563.5
(22) Date of filing: 13.02.2025
(51) Int. Cl.: B60L 3/00, H01M 10/48

(54) **FUNCTIONAL SAFETY FOR INTELLIGENT BATTERY CELL**

(30) Priority: 14.02.2024 US 202418441375
(71) Applicant: Volvo Car Corporation, 405 31 Göteborg (SE)
(72) Inventor: COLAK, Sime, 40531 Göteborg (SE); KIHLÉN, Anders Sven Gustav, 40531 Göteborg (SE); FORSSELL, Jonas, 40531 Göteborg (SE)
(74) Representative: Maiwald GmbH

(57) **Abstract**

A battery pack can comprise a battery monitoring system that can monitor a battery metric of a battery cell of a battery system cluster board, in response to a determination that the battery metric satisfies a first bypass condition, enables a bypass mode applicable to the battery system cluster board, and in response to a determination that the battery metric no longer satisfies the first bypass condition, exits the bypass mode. A primary controller can in response to a determination that a second bypass condition applicable to the battery system cluster board has been satisfied, sends an instruction to the battery monitoring system to enter the bypass mode, and in response to a determination that the second bypass condition is no longer satisfied, sends an override instruction to the battery monitoring system to exit the bypass mode.

## Description

### TECHNICAL FIELD

The disclosed subject matter relates to electric vehicles (e.g., a transportation vehicles) and, more particularly, to functional safety for intelligent battery cell of an electric vehicle.

### BACKGROUND

An electric driveline (e.g., an electric driveline used in an electric vehicle) is based on a battery with a direct current (DC) having hazardous live voltage (e.g., high enough voltage to be hazardous to a person). Many systems are designed around this battery to protect and control the battery. Auxiliary units are used to generate alternating current (AC) voltage to run motors and charge the battery. Such systems are complex and expensive, and are a source of errors.

There are a number of different types of battery packs comprising multiple batteries and/or cells. Some problems with such battery packs include (1) the cells are always on - that is, they always have a hazardous live voltage; and/or (2) the battery cells provide a constant voltage and therefore the battery pack uses auxiliary units to provide fluctuating voltage (e.g., AC voltage) and/or lower voltage (e.g., 12V, 48V, etc.).

In existing battery packs, when a cell error occurs, such as overcurrent or temperature above a safety threshold: (1) the entire battery pack fails; or (2) the failed cell is irreversibly disconnected from the battery pack (e.g., via melted wires or fuses). Both of the scenarios lead to irreversible performance issues for a vehicle comprising such a battery pack.

The above-described background relating to electric vehicles is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, and/or computer program products facilitate functional safety for an intelligent battery cell.

As alluded to above, electric vehicles and electric vehicle battery systems can be improved in various ways, and various embodiments are described herein to this end and/or other ends.

According to an embodiment, a battery pack can comprise a battery monitoring system that monitors a battery metric of a battery cell of a battery system cluster board, in response to a determination that the battery metric satisfies a first bypass condition, enables a bypass mode applicable to the battery system cluster board, and in response to a determination that the battery metric no longer satisfies the first bypass condition, exits the bypass mode; and a primary controller that in response to a determination that a second bypass condition applicable to the battery system cluster board has been satisfied, sends an instruction to the battery monitoring system to enter the bypass mode, and in response to a determination that the second bypass condition is no longer satisfied, sends an override instruction to the battery monitoring system to exit the bypass mode.

According to another embodiment, a non-transitory machine-readable medium can comprise executable instructions that, when executed by a processor, facilitate performance of operations, comprising monitoring a battery metric of a battery cell of a battery system cluster board, in response to a determination that the battery metric satisfies a first bypass condition, enabling a bypass mode applicable to the battery system cluster board, in response to a determination that the battery metric no longer satisfies the first bypass condition, exiting the bypass mode, in response to a determination that a second bypass condition applicable to the battery system cluster board has been satisfied, sending an instruction, via a primary controller, to a battery monitoring system to enter the bypass mode, and in response to a determination that the second bypass condition is no longer satisfied, sending an override instruction to the battery monitoring system to exit the bypass mode.

According to yet another embodiment, a method can comprise monitoring, by a system comprising a processor, a battery metric of a battery cell of a battery system cluster board, in response to a determination that the battery metric satisfies a first bypass condition, enabling, by the system, a bypass mode applicable to the battery system cluster board, in response to a determination that the battery metric no longer satisfies the first bypass condition, exiting, by the system, the bypass mode, in response to a determination that a second bypass condition applicable to the battery system cluster board has been satisfied, sending, by the system, an instruction to a battery monitoring system to enter the bypass mode, and in response to a determination that the second bypass condition is no longer satisfied, sending, by the system, an override instruction to the battery monitoring system to exit the bypass mode.

### BRIEF DESCRIPTION OF DRAWINGS

FIG. 1 illustrates a block diagram of an example system in accordance with one or more embodiments described herein.
FIG. 2 illustrates a block diagram of an example system in accordance with one or more embodiments described herein.
FIG. 3 illustrates an orthogonal view of an example, non-limiting system that can facilitate an intelligent battery cell with integrated monitoring and switches in accordance with one or more embodiments described herein.
FIG. 4 illustrates an orthogonal view of an example, non-limiting system that can facilitate an intelligent battery cell with integrated monitoring and switches in accordance with one or more embodiments described herein.
FIG. 5 illustrates a flowchart for a process associated with functional safety for an intelligent battery cell in accordance with one or more embodiments described herein.
FIG. 6 illustrates a block flow diagram for a process associated with functional safety for an intelligent battery cell in accordance with one or more embodiments described herein.
FIG. 7 is an example, non-limiting computing environment in which one or more embodiments described herein can be implemented.
FIG. 8 is an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

The computer processing systems, computer-implemented methods, apparatus and/or computer program products described herein employ hardware and/or software to solve problems that are highly technical in nature (e.g., facilitating functional safety for an intelligent battery cell), that are not abstract and cannot be performed as a set of mental acts by a human.

In various embodiments, a battery system cluster board (e.g., a smart cell cluster) can have the following responsibilities, among other suitable responsibilities:
(1) The battery system cluster board can keep corresponding battery cells in a safe operating window (e.g., voltage, current, temperature, and/or other suitable metrics). In this regard, the battery cells should, at all times, operate in a safe voltage, current, and temperature window in order to avoid outgassing or a thermal event. Embodiments herein enable each battery system cluster board to bypass current from the battery cluster, for instance, so that the battery cells within the battery cluster and the battery pack as a whole are protected from further voltage increase and decrease. Additionally, overcurrent can be blocked, internal battery heating can be prevented, and usage of cold cells (e.g., below a defined safe temperature threshold) can be prevented. The foregoing is enabled, for instance, using a high integrity circuit (e.g., a battery monitoring system) that forces the battery clusters into a bypass mode, for instance, in case any of the defined unsafe conditions occur, or if the high integrity primary controller does not permit usage of that particular battery cluster. In this regard, each cluster can comprise an independent safety mechanism that does not disturb complete vehicle functionality. Thus, failure of a battery cluster does not fully reduce functionality of a corresponding battery pack as a whole, though a slight overall power reduction as compared to maximum performance can occur per respective cluster failure.
(2) The battery system cluster board can provide string voltage and current control in order to deliver the correct voltage and current needed for the production of torque in the electric machine, receiving and delivering energy to/from external energy sources. The string current should, at all times, be kept in safe ranges (e.g., within defined respective current ranges, voltage ranges, and temperature ranges) in order to avoid overbraking or underbraking of wheels of the electric vehicle. The battery system cluster board can, for instance, enable bypass (e.g., in the bypass mode) of the current from the battery pack, so that the cluster does not contribute to the string voltage and current and prevent the cluster from contributing to the unauthorized torque production. This can be facilitated, for instance, by forcing bypass mode (e.g., via a primary controller and/or via a battery monitoring system) in case the high integrity primary controller does not permit torque generation.
(3) The battery system cluster board can provide low voltage (e.g., voltage less than or equal to approximately 48V) within a defined safe range for the operation of safety-critical loads. High voltage to low voltage conversion should, at all reasonable current loads, provide voltage within a safe defined operating window so that the safety critical loads can maintain their respective safe operations. The battery system cluster board herein can enable control of the high voltage to low voltage conversion, for instance, so that each cluster independently, and with high integrity, converts voltage from high voltage to low voltage when voltage of the low voltage bus is lower than a defined low voltage setpoint, and vice versa, and stops converting high voltage to low voltage when the voltage of the low voltage bus is higher than a defined high voltage setpoint. Both the low voltage and high voltage setpoints can be configured, for instance, with high integrity (e.g., according to automotive safety integrity level (ASIL) D specifications), so that the voltage span is always within a defined safe operating range. Embodiments herein can isolate the DC/DC conversion from the high voltage system, such that a problem on the high voltage side, including in the battery pack, does not propagate to the low voltage side. Additionally, embodiments herein enable redundant low voltage supply capability.

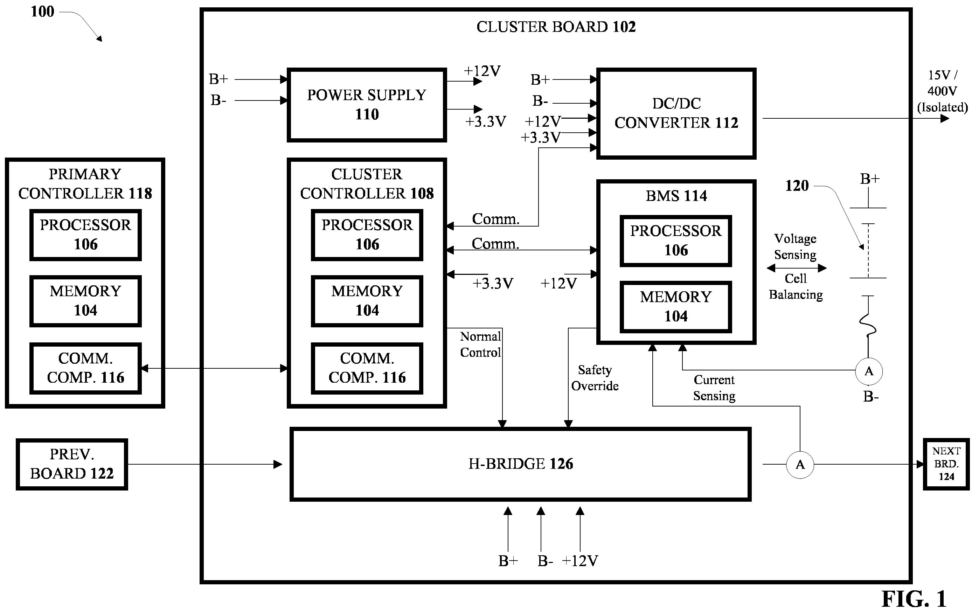

Turning now to FIG. 1, there is illustrated an example, non-limiting system 100 (e.g., a battery pack) in accordance with one or more embodiments herein. System 100 can comprise a computerized tool, which can be configured to perform various operations relating to functional safety for an intelligent battery cell. In various embodiments, the system 100 can be comprised by a vehicle (e.g., an electric vehicle). In this regard, the system 100 can comprise one or more of a variety of components, such as battery system cluster board 102 (e.g., comprising power supply 110, cluster controller 108, DC/DC converter 112, battery monitoring system (BMS) 114, H-bridge 126, and/or battery cells 120). The primary controller 118 can comprise processor 106, memory 104, and/or communication component 116. The cluster controller 108 can comprise processor 106, memory 104, and/or communication component 116. The BMS 114 can comprise processor 106 and/or memory 104. In some embodiments, the battery system cluster board 102 can be communicatively coupled to, or can further comprise, primary controller 118, previous board 122, and/or next board 124. In various embodiments, one or more of the primary controller 118, battery system cluster board 102, power supply 110, cluster controller 108, DC/DC converter 112, BMS 114, H-bridge 126, battery cells 120, previous board 122, and/or next board 124 can be communicatively or operably coupled (e.g., over a bus or wireless network) to one another to perform one or more functions of the system 100. It is noted that previous board 122 and/or next board 124 can comprise respective instances of the battery system cluster board 102, each comprising respective components similar to those of the battery system cluster board 102.

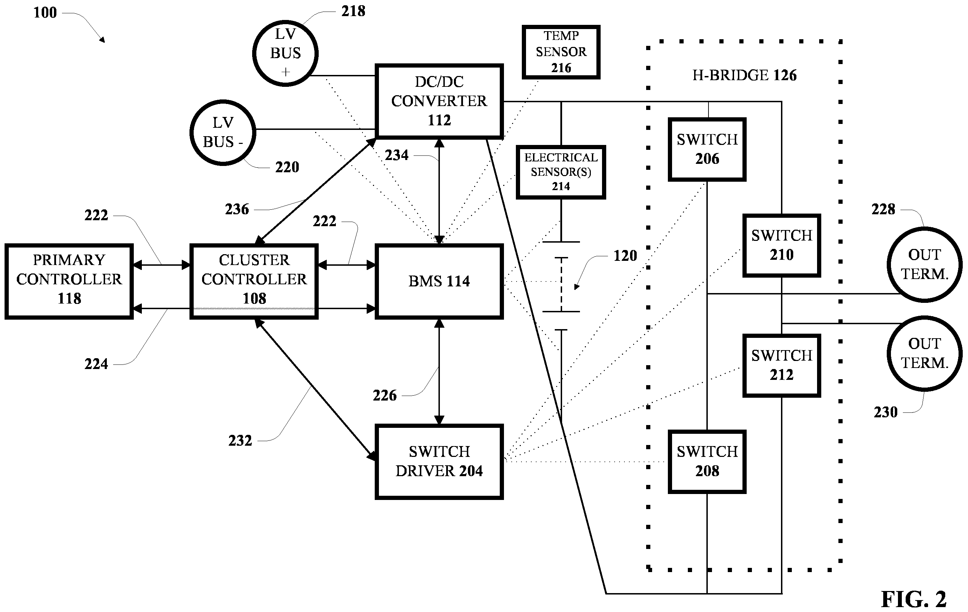

FIG. 2 also illustrates the system 100. In FIG. 2, additional components of the system 100 are depicted. Repetitive description of like components is omitted for sake of brevity. In this regard, the system 100 can comprise positive low voltage bus 218, negative low voltage bus 220, out terminal 228, out terminal 230, temperature sensor 216, electrical sensors (e.g., voltage sensor and/or current sensor) 214, and/or switch driver 204. It is noted that H-bridge 126 can comprise switch 206, switch 208, switch 210, and/or switch 212. Communication channel 222, switch control 232, and/or communication path 236 can comprise quality management (QM) integrity channels. Communication channel 224, pulse width modulation (PWM) 234, and/or forced bypass mode 226 can comprise high integrity channels (e.g., ASIL D rated channels).

In various embodiments herein, the BMS 114 can be configured to monitor for local faults (e.g., local to the battery system cluster board 102), and the primary controller 118 can be configured to monitor for global faults (e.g., of the system 100), which can comprise a plurality of battery system cluster boards 102. For example, the BMS 114 can monitor for cell-related problems, and the primary controller 118 can monitor a plurality of battery system cluster boards 102. The BMS 114 can initiate a bypass mode described herein, for instance, if the BMS 114 determines a local (e.g., battery cell related) problem. In this regard, the BMS 114 can be responsible for exiting (e.g., overriding) a state of entering bypass mode initiated by the BMS 114. Similarly, the primary controller 118 can instruct the BMS 114 to enter a bypass mode, for instance, if the primary controller determines a global (e.g., system 100 level) problem. In this regard, the primary controller 118 can be responsible for instructing the BMS to exit (e.g., override) a state of entering bypass mode initially instructed via the primary controller 118.

According to an embodiment, the BMS 114 can monitor a battery metric of a battery cell 120 of the battery system cluster board 102. In various embodiments, the BMS 114 can, in response to a determination that the battery metric satisfies a bypass condition (e.g., a first bypass condition), enable a bypass mode applicable to the battery system cluster board 102. In one or more embodiments, the first bypass condition can comprise a battery cell temperature exceeding a defined battery cell temperature threshold (e.g., determined via the temperature sensor 216). In additional embodiments, the first bypass condition can comprise a battery cell current exceeding a defined battery cell current threshold (e.g., determined via a current sensor such as electrical sensor 214). In further embodiments, the first bypass condition can comprise a battery cell voltage exceeding a defined battery cell voltage threshold (e.g., determined via a voltage sensor such as electrical sensor 214). In one or more embodiments, the BMS 114 can comprise an ASIL D BMS. In an example bypass mode herein, switch 206 and switch 210 of the H-bridge 126 can be closed (e.g., via the switch driver 204) and switch 208 and switch 212 can be open (e.g., via the switch driver 204). In another example bypass mode herein, switch 206 and switch 210 can be set to open, and switch 208 and switch 212 can be set to closed. In various embodiments, the BMS 114 can exit a bypass mode herein, for instance, if the BMS 114 determines that a battery metric (e.g., that resulted in entering the bypass mode) no longer satisfies the first bypass condition herein.

In various embodiments, an override signal herein (e.g., from the BMS 114) can be sent to the H-bridge 126 and/or switch driver 204. In this regard, in some embodiments, the switch driver 204 can be comprised in the H-bridge 126 or can be a separate component communicatively and/or electrically coupled to the H-bridge 126. It is noted that the switch driver 204 can control opening and closing of each of the switches of the H-bridge 126.

In various embodiments, the BMS 114 can measure (e.g., via temperature sensor 216 and/or electrical sensors 214), the voltage of each battery cell 120, the temperature of the battery cluster, the current of the cluster, the voltage of the cluster, and can diagnose communication from the primary controller 118 (e.g., via communication channel 222 and/or communication channel 224) with high integrity. In various embodiments, the BMS 114 can activate a forced bypass mode in the high integrity switch driver 204, for instance, if one or more battery cells 120 in the battery system cluster board 102 are determined to be outside their safe operating window, if the low voltage bus is below a critical threshold, if the primary controller 118 does not permit operation, and/or or if communication (e.g., via communication channel 222 and/or communication channel 224) with the primary controller 118 is corrupt or broken. In this regard, the switch driver 204 can facilitate operation of the switches 206-212 of the H-bridge 126 to enter (or exit) a bypass mode.

In various embodiments, the cluster controller 108 can control the DC/DC converter 112 according to the lowest and/or highest defined voltage set points (e.g., via communication path 236). In this regard, the cluster controller 108 can set a setpoint between a defined minimum and/or maximum safe setpoint. Further in this regard, any instruction outside the permitted window can be ignored by the DC/DC converter 112. In various embodiments, the cluster controller 108 can promote energy efficiency. In this regard, if only one DC/DC converter 112 is needed in a system 100 (e.g., for present electrical requirements), the cluster controller 108 can determine which DC/DC converter 112 to use and activate (e.g., via communication path 236), while the other DC/DC converters (e.g., other than the DC/DC converter 112 and not depicted herein) can comprise a lower voltage activation setpoint (e.g., sleeping until voltage drops down to their voltage setpoint levels). Further in this regard, the cluster controller 108 can set voltage activation setpoints for respective DC/DC converters 112.

According to an embodiment, the primary controller 118 (e.g., a master controller) can determine whether a bypass condition (e.g., a second bypass condition, other than the first bypass condition) is satisfied. In this regard, the primary controller 118 can, in response to a determination that a second bypass condition applicable to the battery system cluster board 102 has been satisfied, send an instruction to the BMS 114 to enter the bypass mode. Similarly, the primary controller 118 can, in response to a determination that the second bypass condition is no longer satisfied, send an override instruction to the BMS 114 to exit the bypass mode. In one or more embodiments, the primary controller can comprise an ASIL D primary controller. In various embodiments, the primary controller 118 can communicate with the BMS 114 according to a defined interval (e.g., every 10ms, 100ms, or another suitable interval). In various embodiments, the override instruction (e.g., via communication channel 224) can comprise a black channel type communication channel. In this regard, the communication channel 224 can comprise a secure communication channel that is encrypted and protected from unauthorized access or monitoring. Further in this regard, it is noted that the instruction herein (e.g., via communication channel 224) can utilize a checksum algorithm. In one or more embodiments, the primary controller 118 can send an override instruction in response to the second bypass condition being determined to have ended for at least a threshold duration of time. It is noted that, in various embodiments, the primary controller 118 can send the instruction (e.g., to enter the bypass mode) to the BMS 114 based on a comparison of an output from the BMS 114 to another output of another battery system cluster board, other than the battery system cluster board 102 (e.g., previous board 122, next board 124, or another battery system cluster board of a corresponding battery pack comprising the battery system cluster board 102). In this regard, one or more metrics of the battery system cluster board 102 can be compared (e.g., via the primary controller 118) to corresponding metrics of other battery system cluster boards of a corresponding battery pack in order to determine (e.g., via the primary controller 118) whether the one or more metrics are consistent across battery system cluster boards herein. For instance, if the metrics are threshold consistent across battery system cluster boards, the primary controller 118 does not send an instruction (e.g., to the BMS 114) to enter the bypass mode. However, if the metrics are threshold inconsistent across battery system cluster boards, the primary controller can send an instruction (e.g., to the BMS 114) to enter a bypass mode described herein.

According to an embodiment, the cluster controller 108 can relay a signal or instruction herein from the primary controller 118 to the BMS 114 (e.g., via communication channel 224). In one or more embodiments, the cluster controller 108 can comprise a quality management (QM) level cluster controller. The cluster controller 108 can comprise a QM integrity level, for instance, because in various embodiments, the cluster controller 108 only relays instructions or signals herein not generate or even interpret instructions or signals herein.

In various embodiments, the low voltage bus (e.g., comprising positive low voltage bus 218 and negative low voltage bus 220) can supply low voltage within a defined safe window for safety critical loads (e.g., according to an ASIL D integrity level). To achieve high reliability, in various embodiments, the DC/DC converter 112 can comprise an analog DC-DC converter. In one or more embodiments, the DC/DC converter 112 can convert voltage from the battery cells 120 and convert to approximately 15 volts (e.g., or another suitable low voltage) for low voltage loads. In various embodiments, the DC/DC converter 112 can be self-executing, and is not dependent upon the cluster controller 108 or another component in order to convert to the defined low voltage.

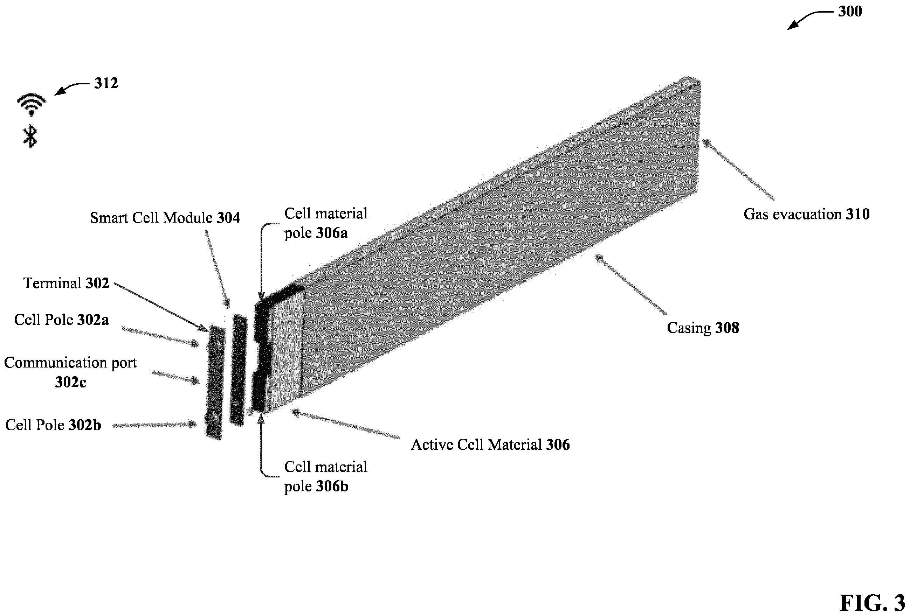

FIG. 3 illustrates an orthogonal view of an example, non-limiting device 300 that can facilitate an intelligent battery cell with integrated monitoring and switches in accordance with one or more embodiments described herein. Device 300 can comprise a battery device and/or a battery cell device that can be implemented in a variety of different electronic systems. In an embodiment, device 300 can be implemented as a single battery device and/or a single battery cell device. In another embodiment, device 300 can be implemented as a single battery device and/or a single battery cell device in a battery pack (also referred to as a battery array, battery bank, power bank, etc.). In another embodiment, device 300 can be implemented as a single battery device and/or a single battery cell device in a battery pack used in an electric driveline of an electric vehicle (EV).

As illustrated in the example embodiment depicted in FIG. 3, device 300 can comprise a terminal 302 comprising cell poles 302a, 302b and/or a communication port 302c. In this embodiment, device 300 can further comprise a smart cell module 304 that can be coupled to terminal 302 and/or cell poles 302a, 302b and further coupled to an active cell material 306 and/or cell material poles 306a, 306b of active cell material 306. In this embodiment, device 300 can further comprise a casing 308 that can encapsulate one or more components of device 300. For example, casing 308 can encapsulate active cell material 306, cell material poles 306a, 306b, and/or smart cell module 304. In some embodiments, casing 308 can also encapsulate (e.g., partially, or fully) terminal 302 and/or cell poles 302a, 302b. In the example embodiment illustrated in FIG. 3, device 300 can further comprise a gas evacuation 310 that can be formed on a side of device 300 and/or casing 308. In various embodiments, the device 300 and/or smart cell module 304 can comprise a battery system cluster board 102 (or one or more components of the battery system cluster board 102).

In various embodiments, terminal 302 can comprise a battery terminal. Cell poles 302a, 302b can comprise battery cell poles (e.g., a positive battery terminal and a negative battery terminal). Terminal 302 and/or cell poles 302a, 302b can comprise an electrically conducting material that can facilitate the transfer of electric current and/or voltage to and/or from smart cell module 304 and/or active cell material 306 (e.g., via cell material poles 306a, 306b).

In various embodiments, communication port 302c can comprise a communication port that can enable a wired connection of device 300 (e.g., a wired connection of smart cell module 304) to another device (e.g., a computer, a controller (e.g., microcontroller), a transceiver, a processor, a memory, etc.). Although the example embodiment illustrated in FIG. 3 comprises communication port 302c that can facilitate a wired connection to device 300 (e.g., to smart cell module 304), it is noted that the subject disclosure is not so limiting. For example, in some embodiments, as described below, device 300 and/or one or more components thereof (e.g., smart cell module 304) can comprise a transmitter, a receiver, and/or a transceiver that can facilitate wireless communication over a network (e.g., the Internet, etc.) between device 300 (e.g., smart cell module 304) and another device (e.g., a computing and/or communication device of an electric vehicle comprising device 300, a computing resource in a cloud computing environment (e.g., a virtual machine, a virtual computer, a server, a memory, etc.), and/or another device).

Smart cell module 304 can comprise an intelligent (e.g., "smart") separator (e.g., interface) between cell poles 302a, 302b (e.g., external cell poles) of terminal 302 and cell material poles 306a, 306b (e.g., internal cell poles) of active cell material 306. Smart cell module 304 can comprise an internal circuit of device 300. Smart cell module 304 can comprise an integrated circuit (IC) that can be formed on a substrate (e.g., a silicon (Si) substrate, etc.) using one or more fabrication techniques and/or materials described below.

Fabrication of device 300 and/or small cell module 304 can comprise multi-step sequences of, for example, photolithographic and/or chemical processing steps that facilitate gradual creation of electronic-based systems, devices, components, and/or circuits in a semiconducting and/or a superconducting device (e.g., an IC). For instance, small cell module 304 can be fabricated on a substrate (e.g., a silicon (Si) substrate, etc.) by employing techniques including, but not limited to: photolithography, microlithography, nanolithography, nanoimprint lithography, photomasking techniques, patterning techniques, photoresist techniques (e.g., positive-tone photoresist, negative-tone photoresist, hybrid-tone photoresist, etc.), etching techniques (e.g., reactive ion etching (RIE), dry etching, wet etching, ion beam etching, plasma etching, laser ablation, etc.), evaporation techniques, sputtering techniques, plasma ashing techniques, thermal treatments (e.g., rapid thermal anneal, furnace anneals, thermal oxidation, etc.), chemical vapor deposition (CVD), atomic layer deposition (ALD), physical vapor deposition (PVD), molecular beam epitaxy (MBE), electrochemical deposition (ECD), chemical-mechanical planarization (CMP), backgrinding techniques, and/or another technique for fabricating an integrated circuit.

In various embodiments, device 300 and/or small cell module 304 can be fabricated using one or more of a variety of suitable materials. For example, device 300 and/or small cell module 304 can be fabricated using materials of one or more different material classes including, but not limited to: conductive materials, semiconducting materials, superconducting materials, dielectric materials, polymer materials, organic materials, inorganic materials, non-conductive materials, and/or another material that can be utilized with one or more of the techniques described above for fabricating an integrated circuit.

Although the example embodiment illustrated in FIG. 3 depicts smart cell module 304 positioned vertically in device 300 between terminal 302 and active cell material 306, it is noted that the subject disclosure is not so limiting. For example, in another embodiment, smart cell module 304 can be positioned (e.g., vertically, horizontally, etc.) in and/or on, for instance, casing 308, active cell material 306, a battery pack comprising device 300, and/or at another location in and/or on device 300 and/or such a battery pack comprising device 300.

In various embodiments, the smart cell module 304 can be implemented in device 300 to form an intelligent battery cell that can comprise one or more integrated monitoring components and/or switches that can facilitate different parameter monitoring and/or collection operations and/or different operating modes of device 300 in accordance with one or more embodiments of the subject disclosure described herein. For example, smart cell module 304 can comprise one or more sensors (e.g., temperature sensor 216, electrical sensors 214, and/or other suitable sensors) that can monitor and/or collect parameter data of device 300 and/or one or more components thereof. For instance, smart cell module 304 can comprise one or more sensors that can monitor and/or collect parameter data of device 300 and/or active cell material 306 including, but not limited to: temperature; pressure (e.g., swelling); chemistry (e.g., chemistry on electrolyte to monitor aging); acceleration (e.g., to sense a crash of, for instance, an electric vehicle comprising device 300); current (e.g., current flowing into and/or out of device 300 and/or active cell material 306); voltage (e.g., voltage potential across cell material poles 306a, 306b of active cell material 306); and/or other parameter data of device 300 and/or active cell material 306. In these examples, smart cell module 304 can further comprise one or more switches (e.g., of an H-bridge 126) that can comprise, for instance, metal-oxide-semiconductor field-effect transistor (MOSFET) switches that can facilitate different operating modes of device 300 (e.g., off, positive, negative, bypass, etc.) in accordance with one or more embodiments of the subject disclosure described herein.

To facilitate such parameter monitoring and/or different operating modes of device 300 described above, smart cell module 304 can comprise a processor 106, a memory 104, one or more sensors, and/or one or more switches. For example, as described below with reference to FIG. 3, smart cell module 304 can comprise a processor 106 (e.g., a central processing unit (CPU), a microprocessor, etc.), a memory 104, one or more sensors (e.g., temperature sensor, pressure sensor, etc.), and/or one or more switches (e.g., MOSFET switches) that can enable the parameter monitoring and/or different operating modes of device 300 described above.

In some embodiments, device 300 and/or smart cell module 304 can comprise a switch controller (e.g., switch driver 204) that can control the operation of such one or more switches (e.g., switches 206-212) to facilitate such different operating modes of device 300 described above. In some embodiments, a battery pack that comprises multiple devices 300 and/or smart cell modules 304 can comprise such a switch controller described above. In these embodiments, such a switch controller in such a battery pack can control (e.g., via processor 106 and/or another processor) the operation of such one or more switches (e.g., MOSFET switches) in each device 300 to facilitate such different operating modes of each device 300 described above.

In various embodiments, the device 300 can comprise a modular component that can function and/or be controlled independent of all other battery devices and/or battery cell devices (e.g., other devices 300) that can be in a battery pack. Therefore, it is noted that one or more devices 300 in such a battery pack can be removed and/or replaced without affecting the structure and/or functionality of the battery pack and/or any other devices 300 in the battery pack as a whole.

In various embodiments, the active cell material 306 can comprise active battery cell material such as a battery cell (also referred to as a "cell"). In various embodiments, the active cell material 306 can comprise a single battery cell or, in some embodiments, multiple individual battery cells (e.g., battery cells 120) that can be positioned inside casing 308 according to a variety of patterns (e.g., vertically, horizontally, etc.). In various embodiments, the active cell material 306 can comprise any type of battery cell material such as, for instance, a lithium battery cell material, a lithium ion (Li-Ion) battery cell material, a lithium metal battery cell material, a lithium sulfur (Li-S) battery cell material, a molten salt (Na-NiCl₂) battery cell material, a nickel metal hydride (Ni-MH) battery cell material, a lead acid battery cell material, and/or another type of battery cell material.

In various embodiments, the gas evacuation 310 can comprise a device and/or structure that can facilitate the release of gas from casing 308 that can be generated by active cell material 306 (e.g., during charging, discharging, etc.). For example, gas evacuation 310 can comprise a vent, a port, a hole, a plate, a flap, a valve (e.g., a pressure relief valve, a one-way valve, a check valve, etc.), and/or another device and/or structure that can facilitate the release of gas from casing 308.

In various embodiments, the smart cell module 304 can comprise any type of component, machine, device, facility, apparatus, and/or instrument that can comprise a processor and/or can be capable of effective and/or operative communication with a wired and/or wireless network. All such embodiments are envisaged. For example, the smart cell module 304 can comprise a computing device, a general-purpose computer, a special-purpose computer, a quantum computing device (e.g., a quantum computer), an integrated circuit, a system on a chip (SOC), and/or another type of device.

In various embodiments, the smart cell module 304 can be coupled (e.g., communicatively, electrically, operatively, optically, etc.) to one or more external systems, sources, and/or devices (e.g., classical and/or quantum computing devices, communication devices, etc.). For example, smart cell module 304 can be coupled via communication port 302c to one or more external systems, sources, and/or devices using a data cable (e.g., High-Definition Multimedia Interface (HDMI), Ethernet cable, etc.) and/or one or more wired networks described below.

In various embodiments, smart cell module 304 can be coupled (e.g., communicatively, electrically, operatively, optically, etc.) to one or more external systems, sources, and/or devices (e.g., classical and/or quantum computing devices, communication devices, etc.) via a network 312. Network 312 can comprise one or more wired and/or wireless networks, including, but not limited to, a cellular network, a wide area network (WAN) (e.g., the Internet), and/or a local area network (LAN). For example, smart cell module 304 can communicate with one or more external systems, sources, and/or devices, for instance, computing devices using network 312, which can comprise virtually any desired wired or wireless technology, including but not limited to: powerline ethernet, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, 6LoWPAN (IPv6 over Low power Wireless Area Networks), Z-Wave, an ANT, an ultra-wideband (UWB) standard protocol, and/or other proprietary and non-proprietary communication protocols. In such an example and as described above, smart cell module 304 can thus include hardware (e.g., a central processing unit (CPU), a transceiver, a decoder, an antenna, quantum hardware, a quantum processor, etc.), software (e.g., a set of threads, a set of processes, software in execution, quantum pulse schedule, quantum circuit, quantum gates, etc.) or a combination of hardware and software that facilitates communicating information between smart cell module 304 and external systems, sources, and/or devices (e.g., computing devices, communication devices, etc.).

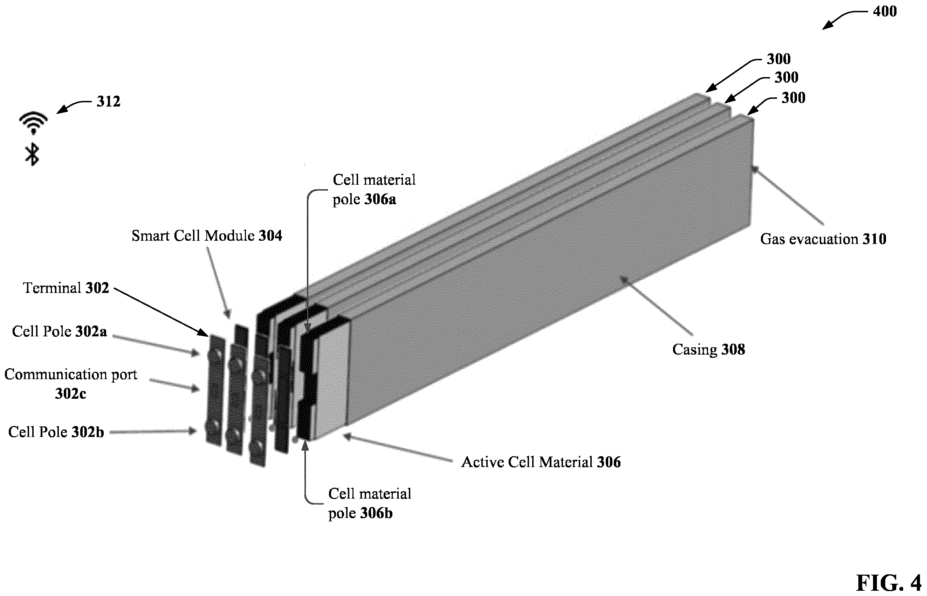

FIG. 4 illustrates an orthogonal view of an example, non-limiting device 400 that can facilitate an intelligent battery cell with integrated monitoring and switches in accordance with one or more embodiments described herein. Repetitive description of like elements and/or processes employed in respective embodiments is omitted for sake of brevity. In various embodiments, the device 400 can comprise a plurality of battery system cluster boards 102 (or one or more components of the battery system cluster board 102).

Device 400 illustrated in FIG. 4 can comprise an example, non-limiting alternative embodiment of device 300 described above with reference to FIG. 3. For example, device 400 can comprise a battery pack having one or more devices 300 (e.g., three as depicted in FIG. 4). In another example, device 400 can comprise a battery pack having one or more devices 300 (e.g., three), in which such a battery pack can be implemented in an electronic system such as, for instance, an electric driveline of an electric vehicle (EV).

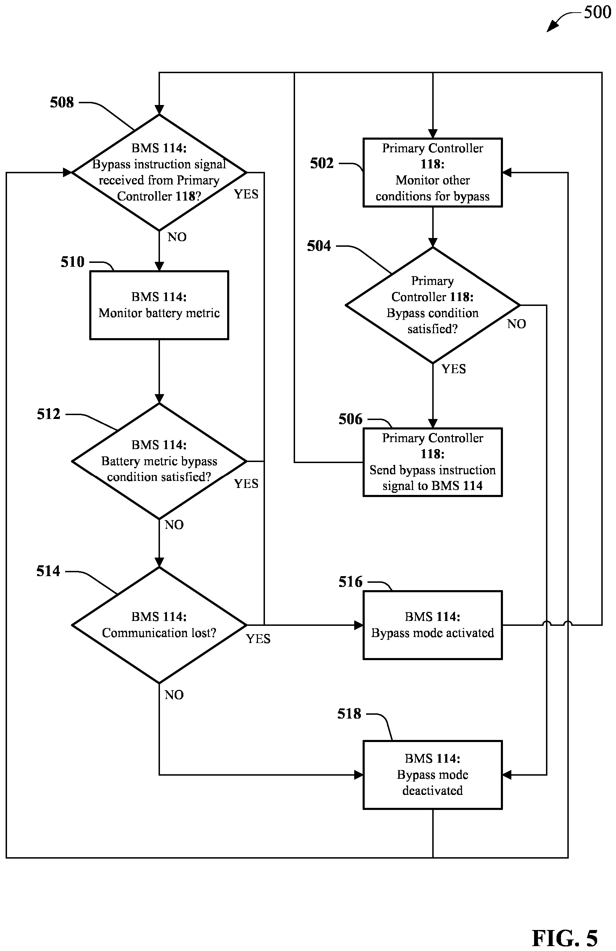

FIG. 5 illustrates a flowchart for a process 500 associated with functional safety for an intelligent battery cell in accordance with one or more embodiments described herein. At 502, the primary controller 118 can monitor for a bypass condition (e.g., a second bypass condition described herein). At 504, if the second bypass condition is satisfied (e.g., YES at 504), the process can proceed to 506. If at 504, the second bypass condition is not satisfied (e.g., NO at 504), the process can proceed to 518. Such a second bypass condition herein can comprise, for instance, a problem with a traction control system or stability control system of a vehicle herein (e.g., as determined via the primary controller 118). As an example, in the bypass mode, torque output of a rear axle of a vehicle herein can be limited 200 Newton-meters (e.g., via a system 100). At 506, the primary controller 118 can send a bypass instruction signal to a BMS 114 at 508. At 508, if the bypass instruction signal is received via the BMS 114 from the primary controller 118 (e.g., YES at 508) the process can proceed to 516. At 516, a bypass mode herein can be activated (e.g., via the BMS 114), and the process 500 can return to steps 508 and/or 508 for continued monitoring. If at 508, the bypass instruction signal is not received via the BMS 114 from the primary controller 118 (e.g., NO at 508) the process can proceed to 510. At 510, the BMS 114 can monitor a battery metric herein. At 512, if the battery metric bypass condition (e.g., a first bypass condition) is determined (e.g., via the BMS 114) to be satisfied, the process can proceed to 516. If at 512, the battery metric bypass condition is not determined to be satisfied (e.g., NO at 512), the process can proceed to 514. At 514, if communication between the BMS 114 and the primary controller 118 is determined to be lost or corrupted (e.g., YES at 514), the process can proceed to 516. If at 514, communication between the BMS 114 and the primary controller 118 is not determined to be lost or corrupted (e.g., NO at 514), the process can proceed to 518. At 518, a bypass mode can be deactivated (e.g., or prevented from activating) at the BMS 114. After step 518, the process 500 can return to steps 502 and/or 508 for continued monitoring via the BMS 114 and the primary controller 118.

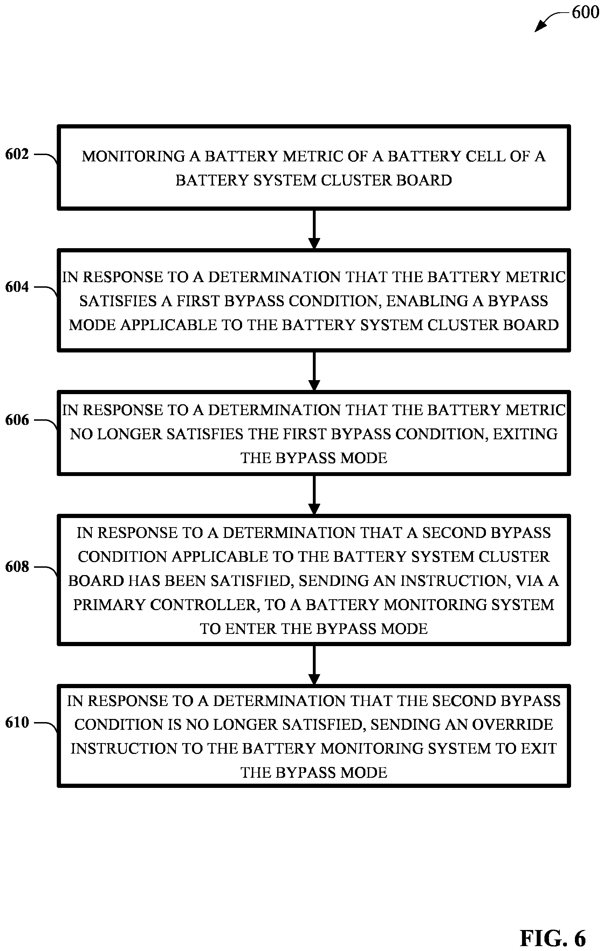

FIG. 6 illustrates a block flow diagram for a process 600 associated with functional safety for an intelligent battery cell in accordance with one or more embodiments described herein. At 602, the process 600 can comprise, monitoring (e.g., via BMS 114) a battery metric of a battery cell 120 of a battery system cluster board 102. At 604, the process 600 can comprise, in response to a determination (e.g., via the BMS 114) that the battery metric satisfies a first bypass condition, enabling (e.g., via the BMS 114) a bypass mode applicable to the battery system cluster board 102. At 606, the process 600 can comprise, in response to a determination (e.g., via the BMS 114) that the battery metric no longer satisfies the first bypass condition, exiting (e.g., via the BMS 114) the bypass mode. At 608, the process 600 can comprise, in response to a determination (e.g., via primary controller 118) that a second bypass condition applicable to the battery system cluster board 102 has been satisfied, sending (e.g., via primary controller 118) an instruction, via a primary controller (e.g., via primary controller 118), to a battery monitoring system (e.g., BMS 114) to enter the bypass mode. At 610, the process 600 can comprise, in response to a determination (e.g., via the primary controller 118) that the second bypass condition is no longer satisfied, sending (e.g., via the primary controller 118) an override instruction to the battery monitoring system (e.g., BMS 114) to exit the bypass mode.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processor 106 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processor 106) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

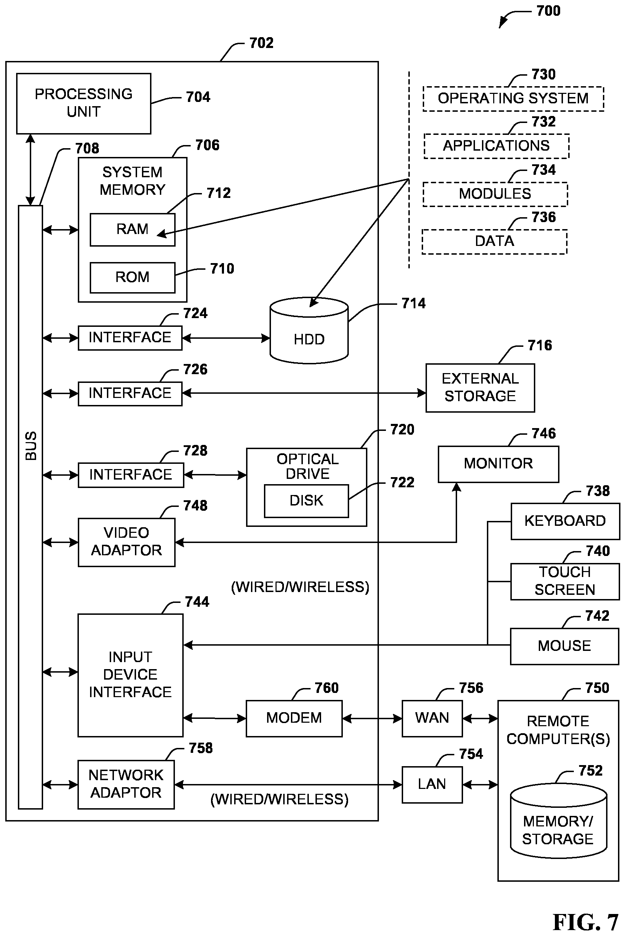

In order to provide additional context for various embodiments described herein, FIG. 7 and the following discussion are intended to provide a brief, general description of a suitable computing environment 700 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 7, the example environment 700 for implementing various embodiments of the aspects described herein includes a computer 702, the computer 702 including a processing unit 704, a system memory 706 and a system bus 708. The system bus 708 couples system components including, but not limited to, the system memory 706 to the processing unit 704. The processing unit 704 can be any of various commercially available processors, field-programmable gate array, AI accelerator application-specific integrated circuit, or other suitable processors. Dual microprocessors and other multi-processor architectures can also be employed as the processing unit 704.

The system bus 708 can be any of several types of bus structure that can further interconnect to a memory bus (with or without a memory controller), a peripheral bus, and a local bus using any of a variety of commercially available bus architectures. The system memory 706 includes ROM 710 and RAM 712. A basic input/output system (BIOS) can be stored in a nonvolatile memory such as ROM, erasable programmable read only memory (EPROM), EEPROM, which BIOS contains the basic routines that help to transfer information between elements within the computer 702, such as during startup. The RAM 712 can also include a high-speed RAM such as static RAM for caching data. It is noted that unified Extensible Firmware Interface(s) can be utilized herein.

The computer 702 further includes an internal hard disk drive (HDD) 714 (e.g., EIDE, SATA), one or more external storage devices 716 (e.g., a magnetic floppy disk drive (FDD) 716, a memory stick or flash drive reader, a memory card reader, etc.) and an optical disk drive 720 (e.g., which can read or write from a disk 722 such as a CD-ROM disc, a DVD, a BD, etc.). While the internal HDD 714 is illustrated as located within the computer 702, the internal HDD 714 can also be configured for external use in a suitable chassis (not shown). Additionally, while not shown in environment 700, a solid-state drive (SSD) could be used in addition to, or in place of, an HDD 714. The HDD 714, external storage device(s) 716 and optical disk drive 720 can be connected to the system bus 708 by an HDD interface 724, an external storage interface 726 and an optical drive interface 728, respectively. The interface 724 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 702, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 712, including an operating system 730, one or more applications 732 (e.g., application programs), other program modules 734 and program data 736. All or portions of the operating system, applications, modules, and/or data can also be cached in the RAM 712. The systems and methods described herein can be implemented utilizing various commercially available operating systems or combinations of operating systems.

Computer 702 can optionally comprise emulation technologies. For example, a hypervisor (not shown) or other intermediary can emulate a hardware environment for operating system 730, and the emulated hardware can optionally be different from the hardware illustrated in FIG. 7. In such an embodiment, operating system 730 can comprise one virtual machine (VM) of multiple VMs hosted at computer 702. Furthermore, operating system 730 can provide runtime environments, such as the Java runtime environment or the .NET framework, for applications 732. Runtime environments are consistent execution environments that allow applications 732 to run on any operating system that includes the runtime environment. Similarly, operating system 730 can support containers, and applications 732 can be in the form of containers, which are lightweight, standalone, executable packages of software that include, e.g., code, runtime, system tools, system libraries and settings for an application.

Further, computer 702 can be enabled with a security module, such as a trusted processing module (TPM). For instance, with a TPM, boot components hash next in time boot components, and wait for a match of results to secured values, before loading a next boot component. This process can take place at any layer in the code execution stack of computer 702, e.g., applied at the application execution level or at the operating system (OS) kernel level, thereby enabling security at any level of code execution.

A user can enter commands and information into the computer 702 through one or more wired/wireless input devices, e.g., a keyboard 738, a touch screen 740, and a pointing device, such as a mouse 742. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 704 through an input device interface 744 that can be coupled to the system bus 708, but can be connected by other interfaces, such as a parallel port, an IEEE 1394 serial port, a game port, a USB port, an IR interface, a BLUETOOTH^{®} interface, etc.

A monitor 746 or other type of display device can be also connected to the system bus 708 via an interface, such as a video adapter 748. In addition to the monitor 746, a computer typically includes other peripheral output devices (not shown), such as speakers, printers, etc.

The computer 702 can operate in a networked environment using logical connections via wired and/or wireless communications to one or more remote computers, such as a remote computer(s) 750. The remote computer(s) 750 can be a workstation, a server computer, a router, a personal computer, portable computer, microprocessor-based entertainment appliance, a peer device or other common network node, and typically includes many or all of the elements described relative to the computer 702, although, for purposes of brevity, only a memory/storage device 752 is illustrated. The logical connections depicted include wired/wireless connectivity to a local area network (LAN) 754 and/or larger networks, e.g., a wide area network (WAN) 756. Such LAN and WAN networking environments are commonplace in offices and companies, and facilitate enterprise-wide computer networks, such as intranets, all of which can connect to a global communications network, e.g., the Internet.

When used in a LAN networking environment, the computer 702 can be connected to the LAN 754 through a wired and/or wireless communication network interface or adapter 758. The adapter 758 can facilitate wired or wireless communication to the LAN 754, which can also include a wireless access point (AP) disposed thereon for communicating with the adapter 758 in a wireless mode.

When used in a WAN networking environment, the computer 702 can include a modem 760 or can be connected to a communications server on the WAN 756 via other means for establishing communications over the WAN 756, such as by way of the Internet. The modem 760, which can be internal or external and a wired or wireless device, can be connected to the system bus 708 via the input device interface 744. In a networked environment, program modules depicted relative to the computer 702 or portions thereof, can be stored in the remote memory/storage device 752. It will be appreciated that the network connections shown are example and other means of establishing a communications link between the computers can be used.

When used in either a LAN or WAN networking environment, the computer 702 can access cloud storage systems or other network-based storage systems in addition to, or in place of, external storage devices 716 as described above. Generally, a connection between the computer 702 and a cloud storage system can be established over a LAN 754 or WAN 756 e.g., by the adapter 758 or modem 760, respectively. Upon connecting the computer 702 to an associated cloud storage system, the external storage interface 726 can, with the aid of the adapter 758 and/or modem 760, manage storage provided by the cloud storage system as it would other types of external storage. For instance, the external storage interface 726 can be configured to provide access to cloud storage sources as if those sources were physically connected to the computer 702.

The computer 702 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

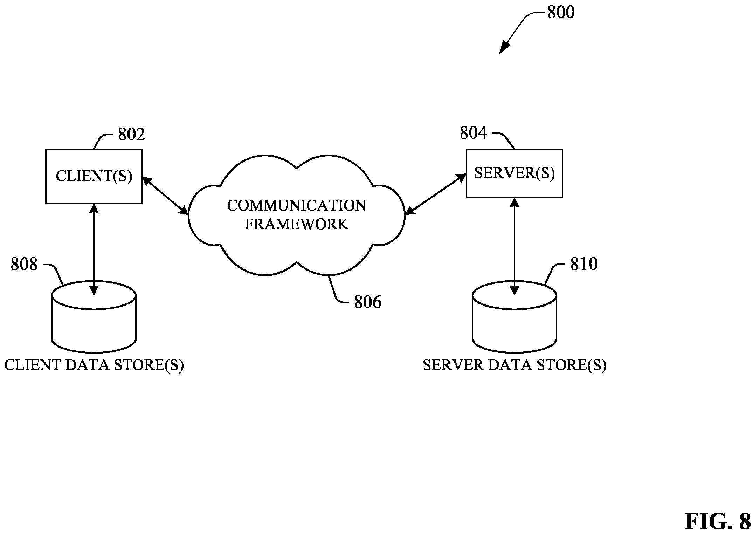

Referring now to FIG. 8, there is illustrated a schematic block diagram of a system 800 (e.g., a computing environment) in accordance with this specification. The system 800 includes one or more client(s) 802, (e.g., computers, smart phones, tablets, cameras, PDA's). The client(s) 802 can be hardware and/or software (e.g., threads, processes, computing devices). The client(s) 802 can house cookie(s) and/or associated contextual information by employing the specification, for example.

The system 800 also includes one or more server(s) 804. The server(s) 804 can also be hardware or hardware in combination with software (e.g., threads, processes, computing devices). The servers 804 can house threads to perform transformations of media items by employing aspects of this disclosure, for example. One possible communication between a client 802 and a server 804 can be in the form of a data packet adapted to be transmitted between two or more computer processes wherein data packets may include coded analyzed headspaces and/or input. The data packet can include a cookie and/or associated contextual information, for example. The system 800 includes a communication framework 806 (e.g., a global communication network such as the Internet) that can be employed to facilitate communications between the client(s) 802 and the server(s) 804.

Communications can be facilitated via a wired (including optical fiber) and/or wireless technology. The client(s) 802 are operatively connected to one or more client data store(s) 808 that can be employed to store information local to the client(s) 802 (e.g., cookie(s) and/or associated contextual information). Similarly, the server(s) 804 are operatively connected to one or more server data store(s) 810 that can be employed to store information local to the servers 804. Further, the client(s) 802 can be operatively connected to one or more server data store(s) 810.

In one exemplary implementation, a client 802 can transfer an encoded file, (e.g., encoded media item), to server 804. Server 804 can store the file, decode the file, or transmit the file to another client 802. It is noted that a client 802 can also transfer uncompressed file to a server 804 and server 804 can compress the file and/or transform the file in accordance with this disclosure. Likewise, server 804 can encode information and transmit the information via communication framework 806 to one or more clients 802.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A battery pack, comprising:
   a battery monitoring system that:
      monitors a battery metric of a battery cell of a battery system cluster board,
      in response to a determination that the battery metric satisfies a first bypass condition, enables a bypass mode applicable to the battery system cluster board, and
      in response to a determination that the battery metric no longer satisfies the first bypass condition, exits the bypass mode; and
   a primary controller that:
      in response to a determination that a second bypass condition applicable to the battery system cluster board has been satisfied, sends an instruction to the battery monitoring system to enter the bypass mode, and
      in response to a determination that the second bypass condition is no longer satisfied, sends an override instruction to the battery monitoring system to exit the bypass mode.
2. The battery pack of any preceding clause, wherein the first bypass condition comprises a battery cell temperature exceeding a defined battery cell temperature threshold.
3. The battery pack of any preceding clause, wherein the first bypass condition comprises a battery cell current exceeding a defined battery cell current threshold.
4. The battery pack of any preceding clause, wherein the first bypass condition comprises a battery cell voltage exceeding a defined battery cell voltage threshold.
5. The battery pack of any preceding clause, wherein the primary controller comprises an automotive safety integrity level D primary controller.
6. The battery pack of any preceding clause, wherein the battery monitoring system comprises an automotive safety integrity level D battery monitoring system.
7. The battery pack of any preceding clause, further comprising:
   a quality management integrity level cluster controller communicatively coupled to the battery monitoring system and the primary controller.
8. The battery pack of any preceding clause, wherein the override instruction comprises a black channel type communication channel.
9. The battery pack of any preceding clause, wherein the primary controller sends the override instruction in response to the second bypass condition being determined to have ended for at least a threshold duration of time.
10. The battery pack of any preceding clause, wherein the primary controller sends the instruction based on a comparison of an output from the battery monitoring system to another output of another battery system cluster board, other than the battery system cluster board.
11. The battery pack of clause 1 above with any set of combinations of the battery packs 2-10 above.
12. A non-transitory machine-readable medium, comprising executable instructions that, when executed by a processor, facilitate performance of operations, comprising:
   monitoring a battery metric of a battery cell of a battery system cluster board;
   in response to a determination that the battery metric satisfies a first bypass condition, enabling a bypass mode applicable to the battery system cluster board;
   in response to a determination that the battery metric no longer satisfies the first bypass condition, exiting the bypass mode;
   in response to a determination that a second bypass condition applicable to the battery system cluster board has been satisfied, sending an instruction, via a primary controller, to a battery monitoring system to enter the bypass mode; and
   in response to a determination that the second bypass condition is no longer satisfied, sending an override instruction to the battery monitoring system to exit the bypass mode.
13. The non-transitory machine-readable medium of any preceding clause, wherein the primary controller comprises an automotive safety integrity level D primary controller.
14. The non-transitory machine-readable medium of any preceding clause, wherein the battery monitoring system comprises an automotive safety integrity level D battery monitoring system.
15. The non-transitory machine-readable medium of any preceding clause, a quality management integrity level cluster controller is communicatively coupled to the battery monitoring system and the primary controller.
16. The non-transitory machine-readable medium of any preceding clause, wherein the override instruction comprises a black channel type communication channel.
17. The non-transitory machine-readable medium of clause 12 above with any set of combinations of the non-transitory machine-readable mediums 13-16 above.
18. A method, comprising:
   monitoring, by a system comprising a processor, a battery metric of a battery cell of a battery system cluster board;
   in response to a determination that the battery metric satisfies a first bypass condition, enabling, by the system, a bypass mode applicable to the battery system cluster board;
   in response to a determination that the battery metric no longer satisfies the first bypass condition, exiting, by the system, the bypass mode;
   in response to a determination that a second bypass condition applicable to the battery system cluster board has been satisfied, sending, by the system, an instruction to a battery monitoring system to enter the bypass mode; and
   in response to a determination that the second bypass condition is no longer satisfied, sending, by the system, an override instruction to the battery monitoring system to exit the bypass mode.
19. The method of any preceding clause, wherein the first bypass condition comprises a battery cell temperature exceeding a defined battery cell temperature threshold.
20. The method of any preceding clause, wherein the first bypass condition comprises a battery cell current exceeding a defined battery cell current threshold.
21. The method of any preceding clause, wherein the first bypass condition comprises a battery cell voltage exceeding a defined battery cell voltage threshold.
22. The method of any preceding clause, wherein the instruction is sent in response to the second bypass condition being determined to have ended for at least a threshold duration of time.
23. The method of clause 18 above with any set of combinations of the methods of clauses 19-22 above.

## Claims

1. A battery pack, comprising:
a battery monitoring system that:
monitors a battery metric of a battery cell of a battery system cluster board,
in response to a determination that the battery metric satisfies a first bypass condition, enables a bypass mode applicable to the battery system cluster board, and
in response to a determination that the battery metric no longer satisfies the first bypass condition, exits the bypass mode; and
a primary controller that:
in response to a determination that a second bypass condition applicable to the battery system cluster board has been satisfied, sends an instruction to the battery monitoring system to enter the bypass mode, and
in response to a determination that the second bypass condition is no longer satisfied, sends an override instruction to the battery monitoring system to exit the bypass mode.

2. The battery pack of claim 1, wherein the first bypass condition comprises a battery cell temperature exceeding a defined battery cell temperature threshold.

3. The battery pack of claim **1,** wherein the first bypass condition comprises a battery cell current exceeding a defined battery cell current threshold.

4. The battery pack of claim **1,** wherein the first bypass condition comprises a battery cell voltage exceeding a defined battery cell voltage threshold.

5. The battery pack of claim 1, wherein the primary controller comprises an automotive safety integrity level D primary controller.

6. The battery pack of claim 1, wherein the battery monitoring system comprises an automotive safety integrity level D battery monitoring system.

7. The battery pack of claim **1,** further comprising:
a quality management integrity level cluster controller communicatively coupled to the battery monitoring system and the primary controller.

8. The battery pack of claim 1, wherein the override instruction comprises a black channel type communication channel.

9. The battery pack of claim 1, wherein the primary controller sends the override instruction in response to the second bypass condition being determined to have ended for at least a threshold duration of time.

10. The battery pack of claim 1, wherein the primary controller sends the instruction based on a comparison of an output from the battery monitoring system to another output of another battery system cluster board, other than the battery system cluster board.

11. A non-transitory machine-readable medium, comprising executable instructions that, when executed by a processor, facilitate performance of operations, comprising:
monitoring a battery metric of a battery cell of a battery system cluster board;
in response to a determination that the battery metric satisfies a first bypass condition, enabling a bypass mode applicable to the battery system cluster board;
in response to a determination that the battery metric no longer satisfies the first bypass condition, exiting the bypass mode;
in response to a determination that a second bypass condition applicable to the battery system cluster board has been satisfied, sending an instruction, via a primary controller, to a battery monitoring system to enter the bypass mode; and
in response to a determination that the second bypass condition is no longer satisfied, sending an override instruction to the battery monitoring system to exit the bypass mode.

12. The non-transitory machine-readable medium of claim 11, wherein the primary controller comprises an automotive safety integrity level D primary controller.

13. The non-transitory machine-readable medium of claim 11, wherein the battery monitoring system comprises an automotive safety integrity level D battery monitoring system.

14. The non-transitory machine-readable medium of claim 11, wherein a quality management integrity level cluster controller is communicatively coupled to the battery monitoring system and the primary controller.

15. A method, comprising:
monitoring, by a system comprising a processor, a battery metric of a battery cell of a battery system cluster board;
in response to a determination that the battery metric satisfies a first bypass condition, enabling, by the system, a bypass mode applicable to the battery system cluster board;
in response to a determination that the battery metric no longer satisfies the first bypass condition, exiting, by the system, the bypass mode;
in response to a determination that a second bypass condition applicable to the battery system cluster board has been satisfied, sending, by the system, an instruction to a battery monitoring system to enter the bypass mode; and
in response to a determination that the second bypass condition is no longer satisfied, sending, by the system, an override instruction to the battery monitoring system to exit the bypass mode.
